# EUROPEAN PATENT SPECIFICATION

(11) **EP 3 798 053 B1**
(45) Date of publication and mention of the grant of the patent: **01.03.2023**
(21) Application number: 19840309.9
(22) Date of filing: 12.06.2019
(51) Int. Cl.: B60N 2/90, A47C 7/62, B60N 2/75, E02F 9/16, H04M 1/11, B66C 13/56

(54) **CAB FOR A CONSTRUCTION MACHINE**
FAHRERHAUS EINER BAUMASCHINE
CABINE POUR UN ENGIN DE CHANTIER

(30) Priority: 27.07.2018 JP 2018140832
(43) Date of publication of application: 31.03.2021
(73) Proprietor: KOBELCO CONSTRUCTION MACHINERY CO., LTD., Hiroshima-shi Hiroshima 731-5161 (JP)
(72) Inventor: ADACHI, Kaoru, Hiroshima-shi, Hiroshima 731-5161 (JP); SAKATANI, Masanori, Hiroshima-shi, Hiroshima 731-5161 (JP); KIMURA, Mao, Hiroshima-shi, Hiroshima 731-5161 (JP); YAMAMOTO, Keiji, Hiroshima-shi, Hiroshima 731-5161 (JP)
(74) Representative: TBK
(86) International application number: PCT/JP2019/023282
(87) International publication number: WO 2020/021893

(56) References cited:
- JP-A- 2000 278 380
- JP-A- 2003 312 375
- JP-A- 2005 035 438
- JP-A- 2009 013 780
- JP-A- 2012 214 087
- JP-A- 2015 086 684
- JP-A- 2015 164 847
- JP-A- 2015 164 847
- JP-A- 2018 075 875
- JP-A- 2018 075 875
- US-A1- 2010 057 307
- US-A1- 2011 127 819
- US-A1- 2017 337 808
- US-A1- 2018 029 537

## Description

### Technical Field

The present invention relates to a cab installed in a construction machine such as a hydraulic excavator.

### Background Art

A general construction machine such as a hydraulic excavator includes a base machine, a working device capable of performing motions for construction work, and a cab mounted on the base machine. The cab is equipped with an operation seat for an operator to sit thereon and a control box including an operation lever.

In such a construction machine, a demand has been increased for communication using a portable communication terminal in recent years. The portable communication terminal is used, for example, to exchange information between a plurality of construction machines and a management office, to communicate between a construction machine and a truck for conveying earth and sand, and to cooperate between a plurality of construction machines.

Since the portable communication terminal is usually accommodated in a pocket or the like of clothing worn by an operator, it is difficult for the operator to confirm the operation of the portable communication terminal (e.g., output of a ring tone or image display) during the work of the construction machine. Especially, in the case of a construction machine, which is under an environment where a loud sound or vibration is generated, the operator is often unaware of an incoming call operation of the portable communication terminal, for example, an incoming call sound or an incoming call display; besides, even if the operator notices the incoming call, it is not always easy for the operator to immediately take out the portable communication terminal and operate it.

Although it is described in the paragraph 0049 of JP 2017 203253 A to install a portable information placement table in the front side of an operation seat to allow a portable information terminal to be placed thereon, the operation seat for the operator to sit thereon is disposed in the cab generally so as to allow the position thereof to be adjusted in the front-rear directions to the cab in a relatively large range and the position adjustment thereof varies the relative positional relationship between the operator seated in the operation seat and the portable information mounting table, which may cause the opposite effect to make the visual confirmation or operation of the portable communication terminal by the operator difficult.

On the other hand, a cab of a construction machine is required to secure good visibility frontward of the operation seat. JP 2015 164847 A discloses a cab for a construction machine having the features of the preamble of claim 1.

### Summary of Invention

It is an object of the present invention to provide a cab of a construction machine that enables an operator sitting on an operation seat to easily perform visual confirmation and operation of a portable communication terminal regardless of the position adjustment of the operation seat and without obstructing a good visual field frontward of the operation seat.

As means for solving the above-mentioned problems, the inventors have focused on a control box disposed on the lateral side of the operation seat, especially, an operation lever thereof. The operation lever is a member operated by an operator for actuating the construction machine, and the position of the operation seat is, therefore, adjusted to a position suitable for the operation of the operation lever by the operator. This can be also said that the adjustment of the position of the operation seat is substantially performed using the position of the operation lever as a reference. Accordingly, determining the position at which the portable communication terminal should be held by use of the position of the operation lever as a reference allows the portable communication terminal to be held at a position which allows the operator to visually confirm and operate the portable communication terminal easily regardless of the position adjustment of the operation seat.

The present invention has been made from such a viewpoint. Provided by the present invention is a cab of a construction machine having the features of claim 1. Advantageous further developments are set out in the dependent claims.

### Brief Description of Drawings

FIG. 1 is a side view of an entire hydraulic excavator which is a construction machine on which a cab according to an embodiment of the present invention is mounted.
FIG. 2 is a perspective view showing the arrangement of components in the interior of the cab.
FIG. 3 is a plan view showing the arrangement of left and right control boxes and an operation seat in the cab.
FIG. 4 is a front view schematically showing a structure for supporting the left and right control boxes and the operation seat slidably in the front-rear direction.
FIG. 5 is a rear view of the arrangement of the left and right control boxes and the operation seat.

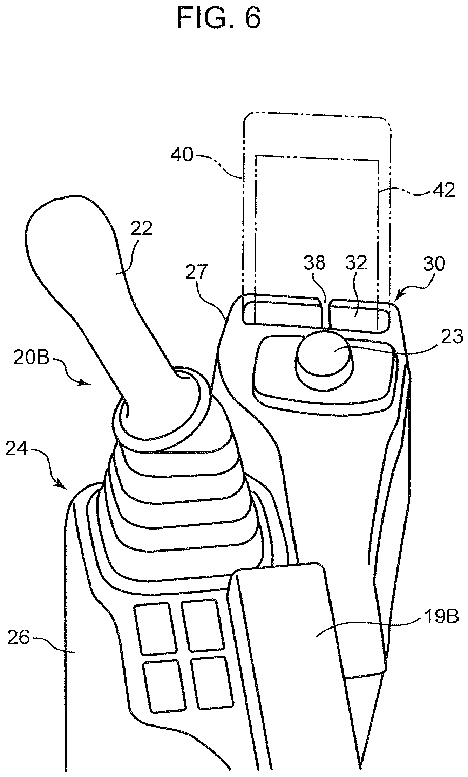

FIG. 6 is an enlarged view of a front side part of the right control box out of the left and right control boxes in FIG. 5.

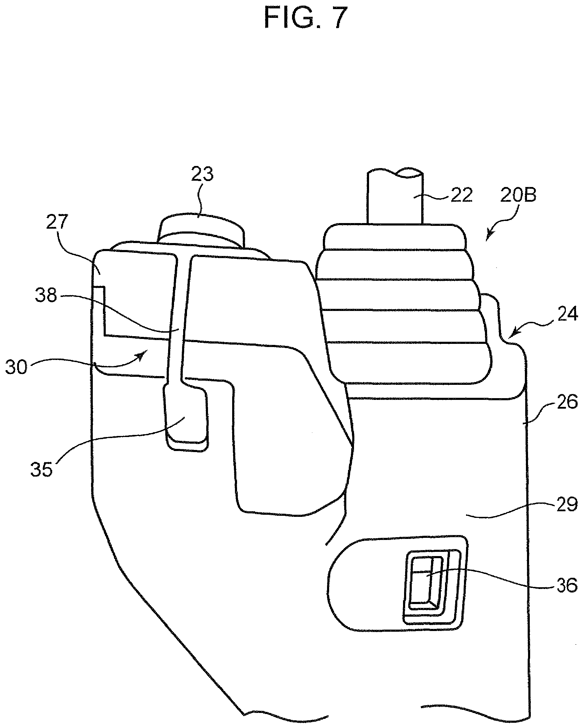

FIG. 7 is a front view of the front side part shown in FIG. 6.
FIG. 8 is a side view showing a longitudinal section including a spring piece of the portable communication terminal holding portion included in the front side part.
FIG. 9 is a front view of the right control box in a state where the portable communication terminal is held in the portable communication terminal holding portion and the portable communication terminal and the portable communication terminal connection terminal are connected to each other through a cable.
FIG. 10 is a side view showing a longitudinal section passing through the slit in the portable communication terminal holding portion in a state shown in FIG. 9.
FIG. 11 is a perspective view of the portable communication terminal holding portion in a state shown in FIG. 9 from the driver's side.

### Description of Embodiments

Hereinafter will be described preferred embodiments of the present invention with reference to the drawings.

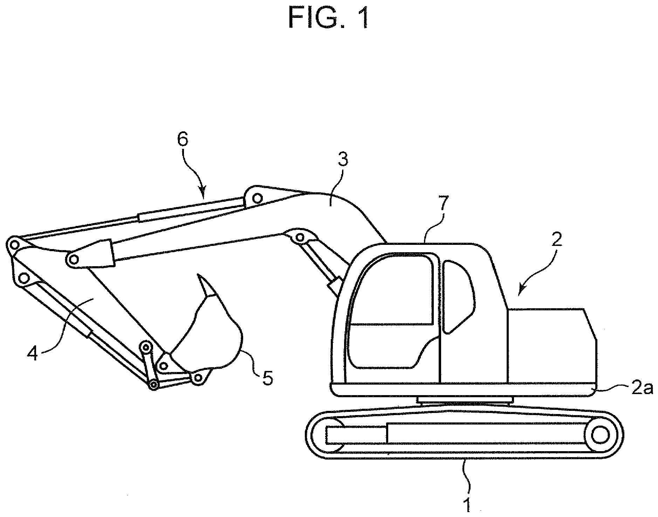

FIG. 1 shows a hydraulic excavator which is an example of a construction machine on which a cab according to the present invention is mounted. The hydraulic shovel includes a crawler-type lower traveling body 1, an upper revolving body 2 which is mounted so as to be revolvable thereon, and a working device 6 mounted on the upper revolving body 2. The upper revolving body 2 includes a revolving frame 2a connected to the lower traveling body 1, and a cab 7 mounted on the revolving frame 2a. The working device 6 includes a boom 3 which is connected to the front end portion (right-side front end portion in the example shown in FIG. 1) of the revolving frame 2a so as to be raisable and lowerable, an arm 4 which is rotationally movably connected to the distal end portion of the boom 3, and a bucket 5 which is rotationally movably connected to the distal end portion of the arm 4.

The cab 7 is mounted on a specific portion in a front part of the revolving frame 2a. The specific portion is a portion adjacent to the boom 3 in the width direction of the revolving frame 2a, i.e., the left front side portion in the case shown in FIG. 1. The cab 7 forms an operation room for operating the hydraulic excavator. In other words, the operations by the operator are performed in the cab 7. The operations include an operation for causing the lower traveling body 1 to perform a traveling motion, an operation for causing the upper revolving body 2 to perform a revolving motion, and an operation for causing the working device 6 to perform a working motion.

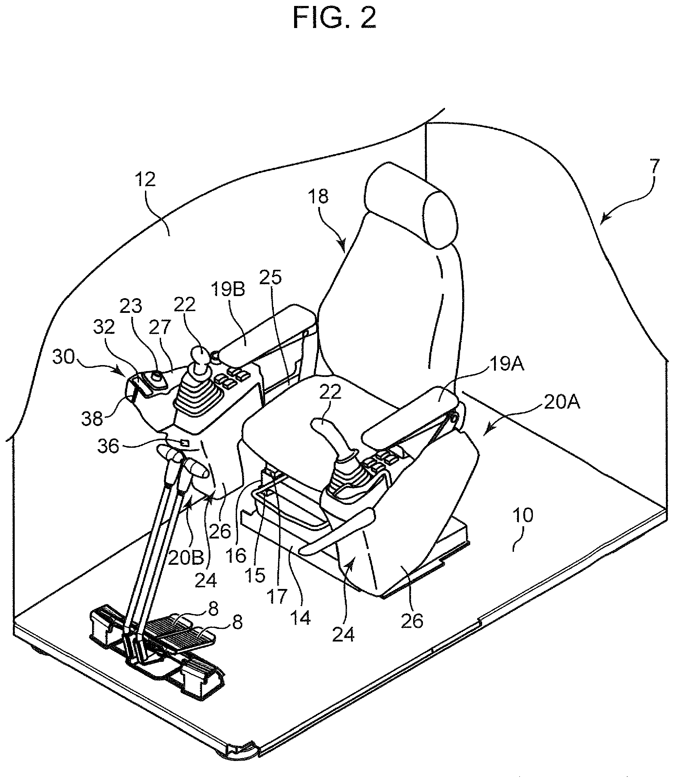

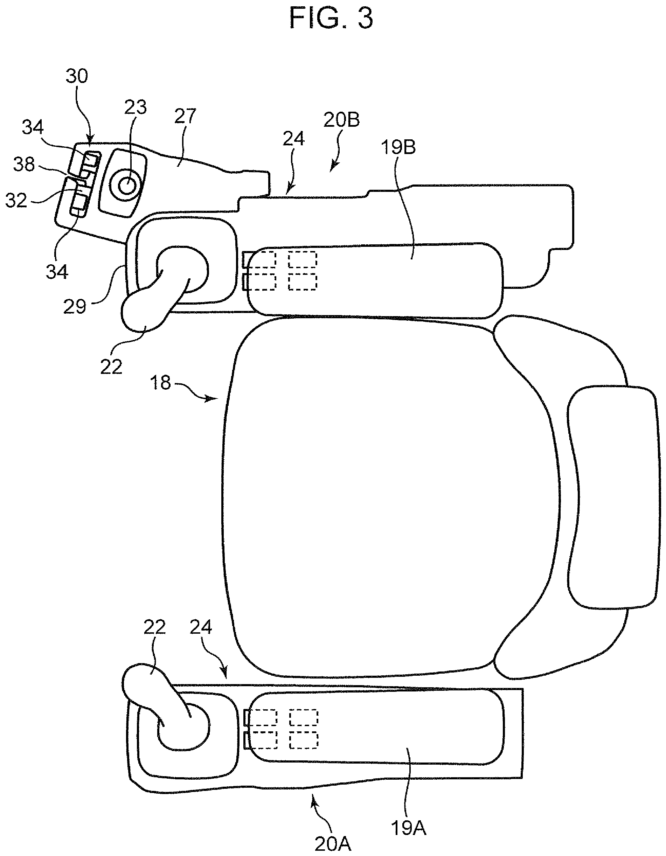

As shown in FIGS. 2 to 5, the cab 7 includes a floor plate 10, a cab outer wall 12, a seat stand 14, an intermediate plate 16, an operation seat 18, left and right armrests 19A, 19B, and left and right control boxes 20A and 20B.

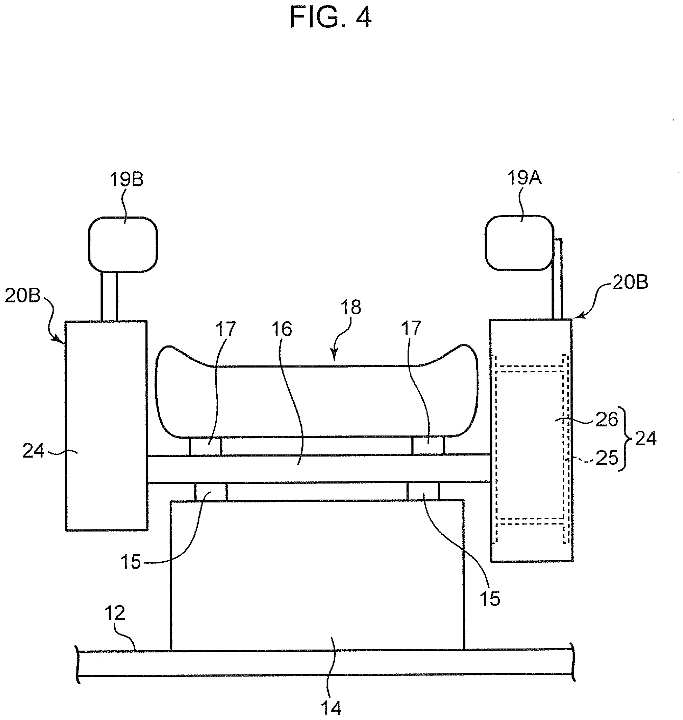

The floor plate 10 is a horizontal plate constituting the floor portion of the cab 7. The floor plate 10 has a front end portion, on which a pair of left and right operation pedals 8 are disposed to receive a pedaling operation by the operator. The cab outer wall 12 covers the floor plate 10 so as to define an operation space above the floor plate 10. The seat stand 14 is fixed on the floor plate 10 so as to protrude upward from the upper surface of the floor plate 10. The intermediate plate 16 is disposed on the seat stand 14 via a pair of left and right first slide rails 15 as shown in FIG. 4 so as to be slidable in the front-rear direction relatively to the seat stand 14.

The operation seat 18 is a seat allowing an operator to sit thereon. The operation seat 18 is disposed substantially at the center of the cab 7 in plan view. The cab outer wall 12 is provided with a window at least on the front side thereof, allowing the visual field frontward of the operator sitting on the operation seat 18 to be secured through the window.

The left and right control boxes 20A and 20B are disposed on the left side and the right side of the operation seat 18, respectively. Each of the left and right control boxes 20A and 20B has an operation lever 22 and a box body 24.

The operation lever 22 receives operations by an operator sitting on the operation seat 18 to be rotationally moved frontward, rearward, leftward and rightward. The operations include an operation for revolving the upper revolving body 2 and an operation for actuating the working device 6.

The box body 24 is disposed so as to extend in the front-rear direction on the lateral side of the operation seat 18. The box body 24 includes a metallic frame 25 indicated by a broken line in FIG. 4, and a cover 26 made of a resin material. The frame 25 supports the operation lever 22 and a not-graphically-shown pilot valve that is opened and closed in conjunction with the operation lever 22. The cover 26 is attached to the frame 25 so as to cover the frame 25, the pilot valve, a not-graphically-shown hydraulic pipe and electrical wiring and the like. The operation lever 22 is supported on the frame 25 so as to pass through the cover 26 to protrude upward beyond the upper surface of the cover 26 in the front part of the box body 24.

The left and right armrests 19A, 19B are supported by the left and right control boxes 20A and 20B, respectively. The left and right armrests 19A, 19B are disposed above the left and right control boxes 20A the 20B, respectively, so as to support the left and right arms of an operator gripping the left and right operation levers 22 under the arm, respectively.

The left and right control boxes 20A and 20B are fixed to the left and right end portions of the intermediate plate 16, respectively, so as to slide integrally with the intermediate plate 16. The operation seat 18 is disposed on the intermediate plate 16 through a pair of left and right second slide rails 17 as shown in FIG. 4, so as to be slidable in the front-rear direction relatively to the intermediate plate 16. The first and second slide rails 15 and 17 are capable of performing sliding motion in the front-rear direction to thereby allow relative positional relationship of three of a cab body including the floor plate 10 and the cab outer wall 12, the operation seat 18, and the left and right control boxes 20A and 20B to be adjusted in the front-rear direction. Specifically, with respect to the front-rear direction, the sliding of the intermediate plate 16 relative to the seat stand 14 allows respective relative positions of the operation seat 18 and the left and right control box 20A and 20B to the cab body to be adjusted and, furthermore, the sliding of the operation seat 18 relative to the intermediate plate 16 allows the relative position of the operation seat 18 to the left and right control boxes 20A and 20B to be adjusted.

In this embodiment, corresponds to the "control box" according to the present invention out of the left and right control boxes 20A and 20B is the control box that is located on the side close to the working device 6 and on the opposite side to the entrance of the cab 7, namely, the right control box 20B. The right control box 20B is provided with a portable communication terminal holding portion 30.

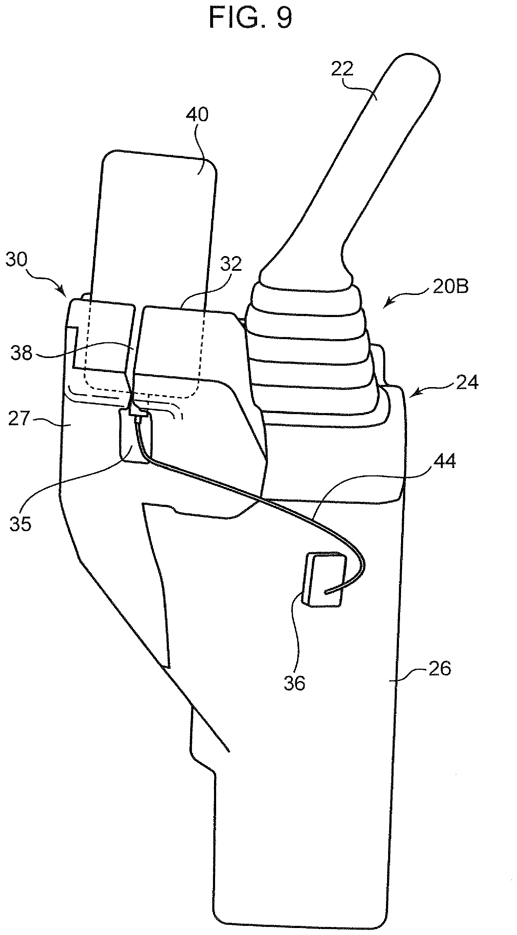

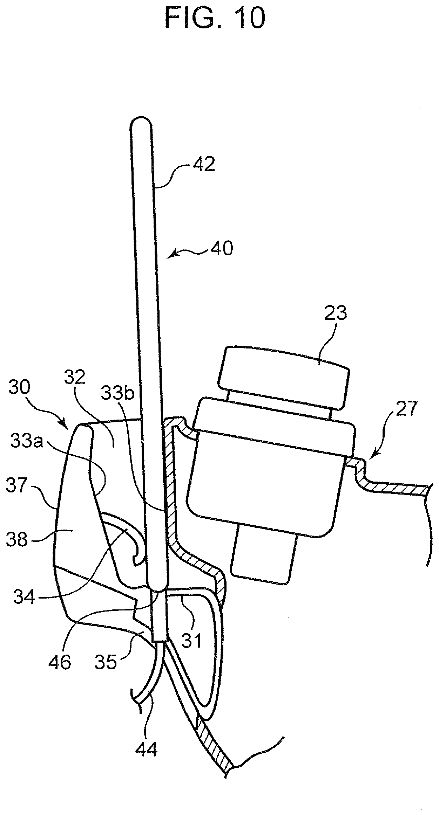

The portable communication terminal holding portion 30 is a portion that detachably holds the portable communication terminal 40 shown in FIGS. 9 and 10. The portable communication terminal 40 is owned by an operator who sits on the operation seat 18. The term "portable communication terminal" as used herein is a concept of broadly including various mobile devices having a communication function and a portable shape, including a smartphone, a cellular phone, a PHS, and the like.

The right control box 20B according to the present embodiment includes a protruding portion 27. The protruding portion 27 protrudes frontward and outward in the width direction of the cab 7 beyond the operation lever 22 (projecting right obliquely forward when viewed from the operation seat 18). At least a front end portion of the protruding portion 27 forms the portable communication terminal holding portion 30. In this embodiment, a dial 23 is provided to be operated on the upper surface of a predetermined portion of the protruding portion 27, and the front end portion of the protruding portion 27 is located further frontward of the dial 23 to form the portable communication terminal holding portion 30. The portable communication terminal holding portion 30 is, therefore, disposed so as to hold the portable communication terminal 40 on the front side and on the outer side in the width direction of the cab 7 using the operation lever 22 as a reference.

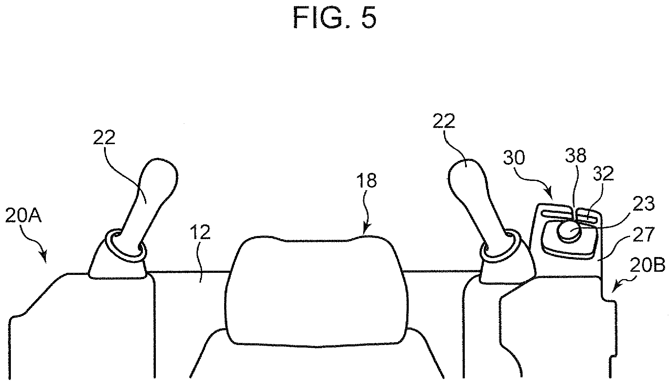

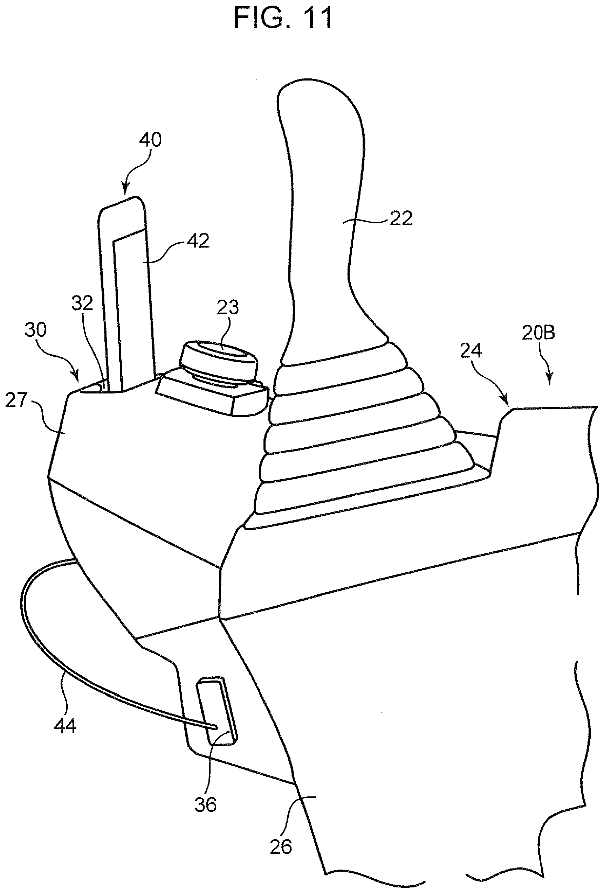

The portable communication terminal holding portion 30 has a shape enclosing an insertion space 32 opened upward to receive insertion of the portable communication terminal 40 from above into the insertion space 32. As shown in FIGS. 5 and 9 to 11, the portable communication terminal holding portion 30 is configured to hold the portable communication terminal 40 while exposing an upper half portion of the portable communication terminal 40 that is inserted into the insertion space 32, the upper half portion including at least a part of the display screen 42, above the cover 26 in the protruding portion 27 and orienting the display screen 42 rearward to the operation seat 18. The insertion space 32 has a cross-sectional shape capable of receiving the portable communication terminal 40, namely, a substantially rectangular shape that is horizontally long in this embodiment, and allows the portable communication terminal 40 to be inserted into the insertion space 32 with a clearance.

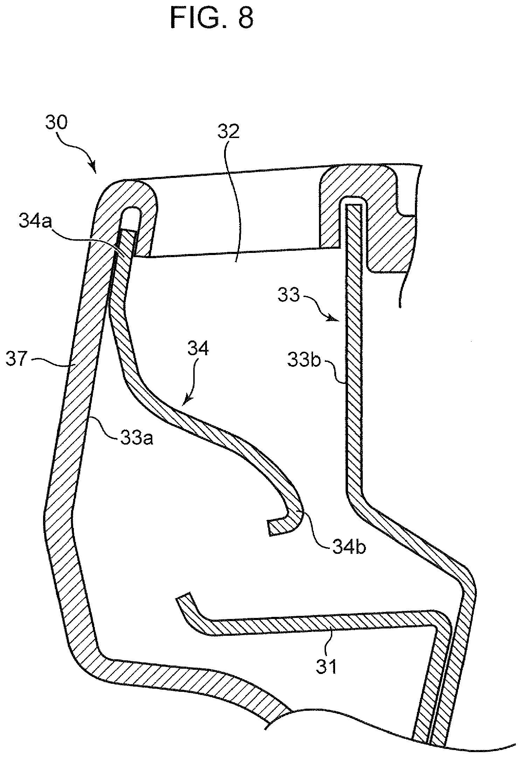

The portable communication terminal holding portion 30, as shown in FIGS. 8 and 10, includes an inner wall surface 33 enclosing the insertion space 32, and a pair of left and right spring pieces 34 for holding the portable communication terminal 40. Each of the pair of spring pieces 34 is made of an elastically deformable material such as resin, having a proximal end portion 34a fixed to a specific portion of the inner wall surface 33, namely, the front surface 33a in this embodiment, and a distal end portion 34b opposite to the proximal end portion 34a. The spring piece 34 has a shape that bulges from the specific portion (the front side surface 33a) to the inside of the portable communication terminal holding portion (rearward in this embodiment) and allows the distal end portion 34b to be elastically bending displaced outward (frontward in this embodiment). The spring pieces 34 allow the portable communication terminal 40 to be inserted into the insertion space 32 as shown in FIG. 10 by the outward bending deformation of the distal end portion 34b, and press the portable communication terminal 40 by the resilient forces of the spring pieces 34 against the surface opposed to the spring pieces 34 in the inner wall surface 33, namely, the rear side surface 33b in this embodiment. The spring pieces 34 thus hold the portable communication terminal 40 between the spring pieces 34 and the rear side surface 33b in the front-rear direction.

The right control box 20B is provided with a portable communication terminal connection terminal 36. The portable communication terminal connection terminal 36 is connected to the portable communication terminal 40 through a cable 44, while being connected to a battery through a not-graphically-shown electric wire. The portable communication terminal connection terminal 36 thus enables the following to be performed: charging of the portable communication terminal 40 by supplying electric power to the portable communication terminal 40; wireless or wired communication with another device or the like; hands-free communication using a speaker in the cab 7, or the like. In the case where the portable communication terminal 40 is a smart phone, the portable communication terminal connection terminal 36 is a USB terminal, and the cable 44 is a USB cable.

In this embodiment, the portable communication terminal connection terminal 36 is disposed on the front end surface of the box body 24, in this embodiment, on the front end surface 29 of a portion of the cover 26 located below the protruding portion 27. The portable communication terminal connection terminal 36 is, therefore, opened frontward to receive the connection of the cable 44 from the front side. This allows the cable 44 to be routed on the front side of the right control box 20B, thereby preventing the cable 44 from hindering the operation seating or operation.

The portable communication terminal 40 includes a cable connection portion 46 to which the cable 44 is connected. The cable connection portion 46 is provided to one end of longitudinally opposite ends of the portable communication terminal 40, specifically the end which serves as the head when inserted into the insertion space 32, that is, the lower end in the insertion posture into the insertion space 32. This causes the cable 44 to extend downward from the lower end portion of the portable communication terminal 40 when the portable communication terminal 40 is inserted into the insertion space 32.

The portable communication terminal holding portion 30 has a shape that opens the lower end portion of the portable communication terminal 40 including the cable connection portion 46 downward to allow the cable 44 to be led out downward from the portable communication terminal holding portion 30. The mode of thus "opening the lower end portion downward" may be either a mode of exposing the lower end portion itself to the outside of the portable communication terminal holding portion 30 or a mode, as shown in FIG. 9, of housing the lower end portion itself but opening it at a position lower than the lower end portion so as to allow the cable 44 to be led out from the lower end portion to the outside. In summary, the shape of the portable communication terminal holding portion 30 only has to be a shape allowing the cable 44 to be led directly downward, without bypassing upward, from the portable communication terminal 40 held in the portable communication terminal holding portion 30.

The portable communication terminal holding portion 30 according to this embodiment includes a bottom wall 31 and an opening window 35. The bottom wall 31 supports the lower end portion of the portable communication terminal 40, at the position thereunder. The opening window 35 opens frontward at a position below the bottom wall 31, allowing the cable 44 to be led out downward through the opening window 35 from the inside of the portable communication terminal holding portion 30. The opening window 35 thereby allows the cable distribution route from the portable communication terminal holding portion to the portable communication terminal connection terminal to be short, as compared with, for example, a case where the cable has to bypass upward to be connected to the portable communication terminal connection terminal.

Furthermore, the portable communication terminal holding portion 30 according to this embodiment is formed with a slit 38. The slit 38 is formed in a wall 37 located on the front side of the insertion space 32 in the portable communication terminal holding portion 30 (i.e. the wall including the front side surface 33a), extending continuously and vertically from the upper end of the portable communication terminal holding portion 30 to the opening window 35. In this embodiment, the slit 38 is formed at a center position of the insertion space 32 with respect to the width direction, and the pair of spring pieces 34 are disposed on the left and right sides of the slit 38, respectively.

The slit 38 has a shape that allows the cable 44 to enter the insertion space 32 from the front side through the slit 38 in a posture where the cable 44 extends downward from the cable connection portion 46 in the lower end of the portable communication terminal 40. The slit 38 thereby facilitates the operation of inserting the portable communication terminal 40 into the portable communication terminal holding portion 30. Specifically, an operator can insert the portable communication terminal 40 into the insertion space 32 from the top, while letting the cable 44 be kept connected to the portable communication terminal 40, so as to insert the cable 44 kept connected to the cable connection portion 46 into the insertion space 32 from the front side through the slit 38. This saves labor for temporary removal of the cable 44 from the portable communication terminal 40 in the insertion space 32.

According to the cab 7 described above, in which the portable communication terminal holding portion 30 is provided to the right control box 20B including the operation lever 22, the relative position of the portable communication terminal holding portion 30 to the operation lever 22 can be kept constant regardless of the position of the operation seat 18. This enables an operator to easily perform operation and visual confirmation of the display image in the portable communication terminal 40 held on the front side of the operation lever 22 in the right control box 20B even when carrying out the adjustment of the position of the operation seat 18 in the front-rear direction relatively to the floor plate 10, the cab outer wall 12, and the control boxes 20A and 20B using the position of the operation lever 22 as a reference like the prior art. Especially in such case of the right control box 20B above which the armrest 19B is disposed to stabilize the posture of the operator who places his arm on the armrest 19B when gripping the operation lever 22, the setting of the position of the portable communication terminal holding portion 30 using the operation lever 22 as a reference is more effective.

Besides, the portable communication terminal 40 held by the portable communication terminal holding portion 30 of the right control box 20B, which is disposed on the lateral side of the operation seat 18, can be effectively prevented from obstructing the visual field frontward of the operation seat, differently from, for example, the case where a portable communication terminal holding portion is provided in the cab body in the front side of the operation seat 18.

The present invention is not limited to the embodiments described above. The present invention encompasses, for example, the following modes.

### (A) Position of Portable Communication Terminal Holding Section

In the present invention, the portable communication terminal holding portion may be provided in any of the left and right control boxes. Alternatively, it may be provided in each of the left and right control boxes. Besides, in a cab provided with a control box on only one of the left and right sides, a portable communication terminal holding portion should be provided in the control box.

The position of the portable communication terminal holding portion in the control box with respect to the cab width direction is also not absolutely limited; it may be located immediately frontward of the operation lever or slightly inside of the operation lever. Even in such an arrangement, the portable communication terminal holding portion, included in the control box arranged on the lateral side of the operation seat, can hold the portable communication terminal without obstructing the visual field frontward of the operation seat. Meanwhile, the portable communication terminal holding portion 30 according to the embodiment or the like, which holds the portable communication terminal at a position on the outer side of the operation lever, allows the visual field from the operator to be more widely secured. Especially, in the case where the control box disposed on the side close to the working device 6 (boom 3 thereof) like the right control box 20B includes the portable communication terminal holding portion, locating the portable communication terminal holding portion on the outer side of the operation lever in the cab width direction makes it possible to secure a wide visual field on the working-device side, thereby enabling the operator to visually confirm the work situation by the working device 6 more sufficiently.

### (B) Shape of Portable Communication Terminal Holding Portion

The shape of the portable communication terminal holding portion can be appropriately varied in accordance with the shape and structure of the portable communication terminal within a range that satisfies the condition of holding the portable communication terminal while exposing a part of the portable communication terminal above the box body. For example, in the case where the portable communication terminal has a cable connection portion not in the lower end portion but in the side portion thereof in the insertion posture, it is possible that the portable communication terminal holding portion is formed with such a slit as to allow the cable connection portion or a cable connected thereto to be inserted through the slit from above to allow wiring to be performed through the slit.

Besides, the portable communication terminal holding portion is not necessarily limited to one that defines the insertion space 32 to receive insertion of the portable communication terminal 40 from above as described above. For example, in the case where a relatively large space is secured on the front side of the control box, the portable communication terminal holding portion according to the present invention may be one that accepts attachment of the portable communication terminal from the front side of the control. Even in this case, the portable communication terminal holding portion, which holds the portable communication terminal so as to expose at least a part of the portable communication terminal above the box body, enables an operator to visually confirm the portable communication terminal easily.

### (C) Structure for Holding Portable Communication Terminal

In the present invention, the number of spring pieces is not limited. The portable communication terminal holding portion according to the present invention may include only a single spring piece or three or more spring pieces. Furthermore, the structure for holding the portable communication terminal by the portable communication terminal holding portion is not limited to the combination of the spring pieces 34 and the inner wall surface 33 as described above. The structure, for example, may include a latch piece that engages with an appropriate portion of the portable communication terminal to lock the portable communication terminal or may simply support the portable communication terminal from below in a merely fitting state. Meanwhile, the combination of the spring pieces 34 and the inner wall surface 33 can allow the portable communication terminal 40 to be inserted and hold the portable communication terminal 40 stably, irrespective of variations in the dimensions of the portable communication terminal 40 (in particular, the dimension in the bending deformation direction of the spring pieces 34, namely, the thickness direction of the portable communication terminal 40, which is the front-rear direction of the cab 7 in the above embodiment).

As described above, there is provided a cab of a construction machine that enables an operator sitting on an operation seat to easily perform visual confirmation and operation of a portable communication terminal regardless of the position adjustment of the operation seat and without obstructing a good visual field frontward of the operation seat.

Provided is a cab of a construction machine, comprising a floor plate, an operation seat disposed on the floor plate so as to allow a position of the operation seat to be adjusted in a front-rear direction relatively to the floor plate, and a control box disposed on a lateral side of the operation seat. The control box includes a box body extending in the front-rear direction on the lateral side of the operation seat, and an operation lever protruding upward beyond an upper surface of a front side part of the box body to receive an operation by the operator sitting on the operation seat. The box body includes a portable communication terminal holding portion which receives insertion of a portable communication terminal at a position on a front side of the operation lever and holds the inserted portable communication terminal while exposing at least a part of the portable communication terminal above the box body.

This cab, in which the portable communication terminal holding portion is provided in the control box including the operation lever, can keep the relative position of the portable communication terminal holding portion to the operation lever constant, regardless of the position of the operation seat. This enables the operator to easily perform visual confirmation and operation of the portable communication terminal held on the front side of the operation lever in the control box, even with adjusting the position of the operation seat in the front-rear direction relatively to the floor plate using the position of the operation lever as a reference similarly to the prior art. Besides, the portable communication terminal held by the portable communication terminal holding portion of the control box, which is disposed on the side of the operation seat, is prevented from significantly obstructing the visual field frontward of the operation seat.

This effect can be obtained in the same manner also in the case where According to the invention the control box is disposed on the floor plate so as to allow a position of the control box to be adjusted relatively to the floor plate in the front-rear direction and the operation seat is disposed so as to allow a position of the operation seat to be adjusted in the front-rear direction relatively to the control box, that is, in the case where the relative positional relationship among the three of the floor plate, the operation seat, and the control box is adjustable. Specifically, even in the mode where the relative position of the control box to the floor plate is thus variable, the portable communication terminal holding portion provided at a position in the front side of the operation lever in the control box including the operation lever to hold the portable communication terminal surely allows the operator sitting on the operation seat to easily perform visual confirmation and operation of the portable communication terminal, regardless of the relative position of the control box to the floor plate, differently from the case where the portable communication terminal is held in the cab body, because the position of the operation seat is basically adjusted to a position for allowing the operator sitting on the operation seat to easily operate the operation lever.

Especially in the case of further comprising an armrest disposed above the control box to support the arm of the operator gripping the operation lever on the lower side of the arm, which allows the posture of the operator gripping the operation lever to be more stable, the effect obtained by setting the position of the portable communication terminal holding portion using the operation lever as a reference is more remarkable.

Preferably, the portable communication terminal holding portion defines an insertion space that is opened upward to receive insertion of the portable communication terminal from the upper side. This makes it easy for the operator to attach the portable communication terminal to the portable communication terminal holding portion.

The portable communication terminal holding portion is, preferably, provided in a front end portion of the box body. This makes it possible to secure a portion to form the portable communication terminal holding portion on the front side of the operation lever with reduced dimensions of the control box.

For example, it is preferable that the box body includes a protruding portion that protrudes frontward and outward in the width direction of the cab beyond the operation lever, and at least a front end portion of the protruding portion forms the portable communication terminal holding portion. The portable communication terminal holding portion, protruding outward in the width direction of the cab beyond the operation lever, allows a more sufficient visual field from the operator sitting on the operation seat to be secured.

In the above arrangement, it is preferable that the box body has a front end surface provided with a portable communication terminal connection terminal, which is connected to the portable communication terminal held in the portable communication terminal holding portion through a cable to thereby connect the portable communication terminal to an electric wiring in the control box. This allows the cable to be located not on the inner side but on the front side of the control box, specifically, to be routed along the front end face of the box body, thereby preventing the cable from hindering the operator's work. In other words, it allows the cable to be routed by use of the space which is on the front side of the control box and therefore does not affect the work of the operator.

In the case where the portable communication terminal has a lower end portion to which the cable is connected in a posture where the portable communication terminal is held by the portable communication terminal holding portion in the mode where the portable communication terminal defines the insertion space opened upward and the portable communication terminal connection terminal is provided in the front surface of the box body as described above, it is preferable that the portable communication terminal holding portion has a shape that opens the lower end portion of the portable communication terminal downward to allow the cable to be led out downward from the portable communication terminal holding portion. This shape allows the routing path of the cable from the portable communication terminal holding portion to the portable communication terminal connection terminal to be short as compared with, for example, the case where the cable bypasses upward to be connected to the portable communication terminal connection terminal. The mode of "opening the lower end portion of the portable communication terminal downward" may be either a mode of opening the lower end portion itself to the outside of the portable communication terminal holding portion or a mode of housing the lower end portion is housed in the portable communication terminal holding portion but opening the insertion space downward at a position lower than the lower end portion so as to allow the cable to be led out from the lower end portion.

In the above mode, it is more preferable that the portable communication terminal holding portion is formed with a slit, which extends vertically so as to allow the cable to enter the portable communication terminal holding portion from the front side in a posture where the cable extends downward from the lower end portion of the portable communication terminal. The slit, allowing the cable to enter the portable communication terminal holding portion from the front side, enables the portable communication terminal to be inserted into the portable communication terminal holding portion from above while the cable is kept connected to the lower end portion of the portable communication terminal, thereby facilitating the operation of inserting the portable communication terminal into the portable communication terminal holding portion.

As a specific mode for allowing the portable communication terminal holding portion to define the insertion space, it is preferable that the portable communication terminal holding portion includes an inner wall surface enclosing the insertion space, and a spring piece bulging from the inner wall surface to the inside of the portable communication terminal holding portion and being capable of elastically outward bending deformation, wherein the spring piece allows the portable communication terminal to be inserted into the insertion space by the outward bending deformation and presses the portable communication terminal against a surface opposed to the spring piece in the inner wall surface by the resilient force of the spring piece to hold the portable communication terminal. The spring piece enables the portable communication terminal to be held stably regardless of variations in the dimensions of the portable communication terminal (especially, the dimension in the bending deformation direction of the spring piece).

## Claims

1. A cab (7) for a construction machine comprising:
a floor plate (10);
an operation seat (18) disposed on the floor plate (10) so as to allow a position of the operation seat (18) to be adjusted in a front-rear direction relatively to the floor plate (10);
a control box (20B) located on a lateral side of the operation seat (18),
the control box (20B) including a box body (24) extending in the front-rear direction on the lateral side of the operation seat (18), and an operation lever (22) protruding upward beyond an upper surface of a front part of the box body (24) to receive an operation by an operator sitting on the operation seat (18); **characterised in that**
the box body (24) includes a portable communication terminal holding portion (30) that receives insertion of a portable communication terminal (40) at a position on a front side of the operation lever (22) and holds the inserted portable communication terminal (40) while exposing at least a part of the portable communication terminal (40) above the box body (24); and
the control box (20B) is disposed on the floor plate (10) so as to allow a position of the control box (20B) to be adjusted relatively to the floor plate (10) in the front-rear direction, and the operation seat (18) is disposed so as to allow a position of the operation seat (18) to be adjusted in the front-rear direction relative to the control box (20B).

2. The cab (7) of a construction machine according to claim 1, further comprising an armrest (19B) disposed above the control box (20B) to support an arm of an operator gripping the operation lever (22) on a lower side of the arm.

3. The cab of a construction machine according to claim 1 or 2, wherein the portable communication terminal holding portion (30) defines an insertion space (32) that is opened upward to receive insertion of the portable communication terminal (40) from the upper side.

4. The cab of a construction machine according to claim 1 or 2, wherein the portable communication terminal holding portion (30) is provided in a front end portion of the box body (24).

5. The cab (7) of a construction machine according to claim 4, wherein, for example, the box body (24) includes a protruding portion (27) that protrudes frontward and outward in a width direction of the cab (7) beyond the operation lever (22), and at least a front end portion of the protruding portion (27) forms the portable communication terminal holding portion (30).

6. The cab of a construction machine according to claim 4 or 5, wherein the box body (24) has a front end surface (29) provided with a portable communication terminal connection terminal (36), which is connected to the portable communication terminal (40) held in the portable communication terminal holding portion (30) through a cable (44) to thereby connect the portable communication terminal (40) to an electric wiring in the control box (20B).

7. The cab of a construction machine according to claim 6, wherein: the portable communication terminal holding portion (30) defines an insertion space (32) that is opened upward to receive insertion of the portable communication terminal (40) from an upper side; the portable communication terminal (40) having a lower end portion to which the cable (44) is connected in a posture where the portable communication terminal (40) is held by the portable communication terminal holding portion (30); and the portable communication terminal holding portion (30) having a shape that opens the lower end portion of the portable communication terminal (40) downward to allow the cable (44) to be led out downward from the portable communication terminal holding portion (30).

8. The cab (7) of a construction machine according to claim 7, wherein the portable communication terminal holding portion (30) is formed with a slit (38), which extends vertically so as to allow the cable (44) to enter the portable communication terminal holding portion (30) from a front side in a posture where the cable (44) extends downward from the lower end portion of the portable communication terminal (40).

9. The cab of a construction machine according to any one of claims 3, 7 and 8, wherein the portable communication terminal holding portion (30) includes an inner wall surface (33) enclosing the insertion space (32), and a spring piece (34) bulging from the inner wall surface (33) to an inside of the portable communication terminal holding portion (30) and being capable of elastically outward bending deformation, and the spring piece (34) allows the portable communication terminal (40) to be inserted into the insertion space (32) by the outward bending deformation and presses the portable communication terminal (40) against a surface (33b) opposed to the spring piece (34) in the inner wall surface (33) by a resilient force of the spring piece (34) to hold the portable communication terminal (40).

## Patentansprüche

1. Kabine (7) für eine Baumaschine, die Folgendes aufweist:
eine Bodenplatte (10);
einen Bedienungssitz (18), der auf der Bodenplatte (10) so angeordnet ist, dass eine Position des Bedienungssitzes (18) in einer Vorne-Hinten-Richtung relativ zur Bodenplatte (10) eingestellt werden kann;
einen Steuerungskasten (20B), der an einer lateralen Seite des Bedienungssitzes (18) gelegen ist,
wobei der Steuerungskasten (20B) einen Kastenkörper (24) hat, der sich in der Vorne-Hinten-Richtung auf der lateralen Seite des Bedienungssitzes (18) erstreckt, und einen Bedienhebel (22), der nach oben über eine obere Fläche eines vorderen Teils des Kastenkörpers (24) hinaus vorsteht, um eine Bedienung durch einen auf dem Bedienungssitz (18) sitzenden Bediener aufzunehmen;
**dadurch gekennzeichnet, dass**
der Kastenkörper (24) einen Halteabschnitt (30) für ein tragbares Kommunikationsendgerät hat, der ein Einsetzen eines tragbaren Kommunikationsendgeräts (40) an einer Position auf einer vorderen Seite des Bedienhebels (22) aufnimmt und das eingesetzte tragbare Kommunikationsendgerät (40) hält, während zumindest ein Teil des tragbaren Kommunikationsendgeräts (40) oberhalb des Kastenkörpers (24) freigelegt wird; und
der Steuerungskasten (20B) auf der Bodenplatte (10) angeordnet ist, sodass eine Position des Steuerungskastens (20B) relativ zu der Bodenplatte (10) in der Vorne-Hinten-Richtung eingestellt werden kann, und der Bedienungssitz (18) angeordnet ist, sodass eine Position des Bedienungssitzes (18) in der Vorne-Hinten-Richtung relativ zu dem Steuerungskasten (20B) eingestellt werden kann.

2. Kabine (7) einer Baumaschine nach Anspruch 1, ferner mit einer Armlehne (19B), die oberhalb des Steuerungskastens (20B) angeordnet ist, um einen Arm eines Bedieners zu stützen, der den Betätigungshebel (22) auf einer unteren Seite des Arms greift.

3. Kabine einer Baumaschine nach Anspruch 1 oder 2, wobei der Halteabschnitt (30) für das tragbare Kommunikationsendgerät einen Einsetzraum (32) definiert, der nach oben geöffnet ist, um das tragbare Kommunikationsendgerät (40) von der oberen Seite her aufzunehmen.

4. Kabine einer Baumaschine nach Anspruch 1 oder 2, wobei der Halteabschnitt (30) für das tragbare Kommunikationsendgerät in einem vorderen Endabschnitt des Kastenkörpers (24) vorgesehen ist.

5. Kabine (7) einer Baumaschine nach Anspruch 4, wobei beispielsweise der Kastenkörper (24) einen vorstehenden Abschnitt (27) hat, der in einer Breitenrichtung der Kabine (7) über den Bedienhebel (22) hinaus nach vorne und nach außen vorsteht, und mindestens ein vorderer Endabschnitt des vorstehenden Abschnitts (27) den Halteabschnitt (30) für das tragbare Kommunikationsendgerät ausbildet.

6. Kabine einer Baumaschine nach Anspruch 4 oder 5, wobei der Kastenkörper (24) eine vordere Endfläche (29) hat, die mit einer Anschlussstelle (36) für ein tragbares Kommunikationsendgerät versehen ist, die mit dem in dem Halteabschnitt (30) für das tragbare Kommunikationsendgerät gehaltenen tragbaren Kommunikationsendgerät (40) durch ein Kabel (44) verbunden ist, um dadurch das tragbare Kommunikationsendgerät (40) mit einer elektrischen Verkabelung in dem Steuerungskasten (20B) zu verbinden.

7. Kabine einer Baumaschine nach Anspruch 6, wobei: der Halteabschnitt (30) für das tragbare Kommunikationsendgerät einen Einsetzraum (32) definiert, der nach oben geöffnet ist, um ein Einsetzen des tragbaren Kommunikationsendgeräts (40) von einer oberen Seite her aufzunehmen; wobei das tragbare Kommunikationsendgerät (40) einen unteren Endabschnitt hat, mit welchem das Kabel (44) in einer Stellung verbunden ist, in welcher das tragbare Kommunikationsendgerät (40) durch den Halteabschnitt (30) für das tragbare Kommunikationsendgerät gehalten wird; und wobei der Halteabschnitt (30) für das tragbare Kommunikationsendgerät eine Form hat, die den unteren Endabschnitt des tragbaren Kommunikationsendgeräts (40) nach unten öffnet, um zu ermöglichen, dass das Kabel (44) nach unten hin aus dem Halteabschnitt (30) für das tragbare Kommunikationsendgerät herausgeführt wird.

8. Kabine (7) einer Baumaschine nach Anspruch 7, wobei der Halteabschnitt (30) für das tragbare Kommunikationsendgerät mit einem Schlitz (38) ausgebildet ist, der sich vertikal erstreckt, sodass das Kabel (44) in den Halteabschnitt (30) für das tragbare Kommunikationsendgerät von einer Vorderseite her in einer Stellung eintreten kann, in der sich das Kabel (44) von dem unteren Endabschnitt des tragbaren Kommunikationsendgeräts (40) nach unten erstreckt.

9. Kabine einer Baumaschine nach einem der Ansprüche 3, 7 und 8, wobei der Halteabschnitt (30) für das tragbare Kommunikationsendgerät eine innere Wandfläche (33), die den Einsatzraum (32) umschließt, und ein Federstück (34) hat, das sich von der inneren Wandfläche (33) zu einer Innenseite des Halteabschnitts (30) für das tragbare Kommunikationsendgerät wölbt und zu einer nach außen gerichteten elastischen Biegeverformung fähig ist, und das Federstück (34) es dem tragbaren Kommunikationsendgerät (40) ermöglicht, durch die nach außen gerichtete Biegeverformung in den Einsetzraum (32) eingesetzt zu werden, und das tragbare Kommunikationsendgerät (40) gegen eine Fläche (33b), die dem Federstück (34) in der Innenwandfläche (33) gegenüberliegt, durch eine elastische Kraft des Federstücks (34) drückt, um das tragbare Kommunikationsendgerät (40) zu halten.

## Revendications

1. Cabine (7) pour un engin de chantier comprenant :
une plaque de plancher (10) ;
un siège de manoeuvre (18) disposé sur la plaque de plancher (10) de manière à permettre à une position du siège de manoeuvre (18) d'être réglée dans une direction avant-arrière par rapport à la plaque de plancher (10) ;
un boîtier de commande (20B) situé sur un côté latéral du siège de manoeuvre (18),
le boîtier de commande (20B) comprenant un corps de boîtier (24) s'étendant dans la direction avant-arrière sur le côté latéral du siège de manoeuvre (18), et un levier d'actionnement (22) faisant saillie vers le haut au-delà d'une surface supérieure d'une partie avant du corps de boîtier (24) pour recevoir un actionnement par un opérateur assis sur le siège de manoeuvre (18) ;
**caractérisée en ce que**
le corps de boîtier (24) comprend une partie de maintien de terminal de communication portable (30) qui reçoit l'insertion d'un terminal de communication portable (40) à une position sur un côté avant du levier d'actionnement (22) et maintient le terminal de communication portable (40) inséré tout en exposant au moins une partie du terminal de communication portable (40) au-dessus du corps de boîtier (24) ; et
le boîtier de commande (20B) est disposé sur la plaque de plancher (10) de manière à permettre à une position du boîtier de commande (20B) d'être réglée par rapport à la plaque de plancher (10) dans la direction avant-arrière, et le siège de manoeuvre (18) est disposé de manière à permettre à une position du siège de manoeuvre (18) d'être réglée dans la direction avant-arrière par rapport au boîtier de commande (20B).

2. Cabine (7) d'un engin de chantier selon la revendication 1, comprenant en outre un accoudoir (19B) disposé au-dessus du boîtier de commande (20B) pour supporter un bras d'un opérateur saisissant le levier d'actionnement (22) sur un côté inférieur du bras.

3. Cabine d'un engin de chantier selon la revendication 1 ou 2, dans laquelle la partie de maintien de terminal de communication portable (30) définit un espace d'insertion (32) qui est ouvert vers le haut pour recevoir l'insertion du terminal de communication portable (40) depuis le côté supérieur.

4. Cabine d'un engin de chantier selon la revendication 1 ou 2, dans laquelle la partie de maintien de terminal de communication portable (30) est prévue dans une partie d'extrémité avant du corps de boîtier (24).

5. Cabine (7) d'un engin de chantier selon la revendication 4, dans laquelle, par exemple, le corps de boîtier (24) comprend une partie en saillie (27) qui fait saillie vers l'avant et vers l'extérieur dans une direction de largeur de la cabine (7) au-delà du levier d'actionnement (22), et au moins une partie d'extrémité avant de la partie en saillie (27) forme la partie de maintien de terminal de communication portable (30).

6. Cabine d'un engin de chantier selon la revendication 4 ou 5, dans laquelle le corps de boîtier (24) présente une surface d'extrémité avant (29) munie d'un terminal de connexion du terminal de communication portable (36), qui est connecté au terminal de communication portable (40) maintenu dans la partie de maintien de terminal de communication portable (30) par l'intermédiaire d'un câble (44) pour connecter ainsi le terminal de communication portable (40) à un câblage électrique dans le boîtier de commande (20B).

7. Cabine d'un engin de chantier selon la revendication 6, dans laquelle : la partie de maintien de terminal de communication portable (30) définit un espace d'insertion (32) qui est ouvert vers le haut pour recevoir l'insertion du terminal de communication portable (40) depuis un côté supérieur ; le terminal de communication portable (40) présentant une partie d'extrémité inférieure à laquelle le câble (44) est connecté dans une posture où le terminal de communication portable (40) est maintenu par la partie de maintien de terminal de communication portable (30) ; et la partie de maintien de terminal de communication portable (30) présentant une forme qui ouvre la partie d'extrémité inférieure du terminal de communication portable (40) vers le bas pour permettre au câble (44) d'être conduit vers le bas à partir de la partie de maintien de terminal de communication portable (30).

8. Cabine (7) d'un engin de chantier selon la revendication 7, dans laquelle la partie de maintien de terminal de communication portable (30) est formée avec une fente (38), qui s'étend verticalement de façon à permettre au câble (44) d'entrer dans la partie de maintien de terminal de communication portable (30) depuis un côté avant dans une position où le câble (44) s'étend vers le bas depuis la partie d'extrémité inférieure du terminal de communication portable (40).

9. Cabine d'un engin de chantier selon l'une quelconque des revendications 3, 7 et 8, dans laquelle la partie de maintien de terminal de communication portable (30) comprend une surface de paroi interne (33) entourant l'espace d'insertion (32), et une pièce de ressort (34) en saillie depuis la surface de paroi interne (33) vers un intérieur de la partie de maintien de terminal de communication portable (30) et étant capable de se déformer par flexion élastique vers l'extérieur, et la pièce de ressort (34) permet au terminal de communication portable (40) d'être inséré dans l'espace d'insertion (32) par la déformation par flexion vers l'extérieur et presse le terminal de communication portable (40) contre une surface (33b) opposée à la pièce de ressort (34) dans la surface de paroi interne (33) par une force élastique de la pièce de ressort (34) pour maintenir le terminal de communication portable (40).
